(19) **Europäisches Patentamt / European Patent Office / Office européen des brevets**

(11) **EP 1 347 596 B1**

(12) **EUROPEAN PATENT SPECIFICATION**

(45) Date of publication and mention
of the grant of the patent:
**28.02.2007 Bulletin 2007/09**

(51) Int Cl.:
*H04L 9/30* (2006.01)

(21) Application number: **02102713.1**

(22) Date of filing: **10.12.2002**

(54) **Digital signature methods and apparatus**

Verfahren und Vorrichtung zur Erzeugung von Digitalsignaturen

Procédé et dispositif de signature numérique

(84) Designated Contracting States:
**AT BE BG CH CY CZ DE DK EE ES FI FR GB GR IE IT LI LU MC NL PT SE SI SK TR**

(30) Priority: **26.02.2002 KR 2002010256**

(43) Date of publication of application:
**24.09.2003 Bulletin 2003/39**

(73) Proprietors:
• **Joohong Information & Communication Co., Ltd. Songpa-gu,
Seoul (KR)**
• **Ha, Jae-cheol
Cheonan-si,
Chungcheongnam-do (KR)**
• **Moon, Sang jae
Dong-gu,
Daegu (KR)**

(72) Inventors:
• **Shin, Young gun
Songpa-gu
Seoul (KR)**
• **Ha, Jae-cheol
Cheonan-si,
Chungcheongnam-do (KR)**
• **Moon, Sang jae
Daegu (KR)**

• **Kim, Seong-joo
Seoul (KR)**
• **Lim, Seon-gan
Namdong-gu
Incheon (KR)**
• **Yen, Sung-min
(LCIS)
National Central University
Chung-li, 320 R.O.C. (TW)**

(74) Representative: **Stanley, David William et al
Stanleys
Intellectual Property
Kings Court
12 King Street
Leeds LS1 2HL (GB)**

(56) References cited:
• **SUNG-MING YEN; SEUNGJOO KIM; SEONGAN LIM; SANGJAE MOON : "RSA speedup with residue number system immune against hardware fault cryptanalysis" INFORMATION SECURITY AND CRYPTOLOGY - ICISC 2001. 4TH INTERNATIONAL CONFERENCE. PROCEEDINGS (LECTURE NOTES IN COMPUTER SCIENCE VOL.2288), SPRINGER-VERLAG, 7 December 2001 (2001-12-07), pages 397-413, XP002233842 Seoul, South Korea ISBN: 3-540-43319-8**

**Description**

The present invention relates to digital signature methods and apparatus using a Rivest, Shamir and Adelman (RSA) public-key cryptography based on a Chinese Remainder Theorem (CRT).

Examples of such cryptography are symmetric key cryptography and public key cryptography (i.e. asymmetric cryptography). RSA public-key cryptography as public key cryptography is widely used in the Internet or banking circles at present.

RSA public-key cryptography was proposed by Rivest, Shamir and Adleman and has the basis of its security in the fact that factorisation in prime factors is more difficult as a numeral increases. Like usual public key cryptography, the RSA public-key cryptography employs a public key known to the public and a secret key known only to a person composing a cryptograph.

A person composing a cryptograph sets prime numbers $p$ and $q$ as secret keys and sets "$n$ (=$p*q$)" as a public key. For security, the preferred prime numbers $p$ and $q$ have at least 385 bits and have similar lengths. Thereafter, a random integer $e$ relatively prime to an Euler's totient function, $\phi(n)$ (=($p$-1)($q$-1)) is set as a public key, and $d$ obtained using a Euclid algorithm to satisfy $e \cdot d = 1 \bmod \phi(n)$ is set as a secret key.

In RSA public-key cryptography, after $p$, $q$, and $d$ are set as secret keys and $n$ and $e$ are set as public keys, as described above, a message to be transmitted is encrypted using a sender's secret keys or a recipient's public keys. The received message is decrypted using the sender's public keys or the recipient's secret keys.

When the message to be transmitted is represented by $M$, the sender transmits a cryptograph, $C=M^e \bmod n$, to the recipient, and the recipient decrypts the C according to $M=C^d \bmod n$ to view the message.

Meanwhile, for a digital signature, the sender transmits a signature $S$ generated according to $S=M^d \bmod n$ together with the message $M$ to the recipient. Then, the recipient performs decryption according to $M' = S^e \bmod n$, compares the received $M$ with the calculated $M'$, and authenticates the signature $S$ when both are the same.

In an RSA system, it is the key of decryption of a cryptograph to detect the secret key $d$ from public information. To succeed in detecting the secret key $d$ from public information, $\phi(n)$ is needed, which is concluded by detecting $p$ and $q$ by factorizing $n$ in prime factors. In order to prevent others from decrypting a cryptograph, a sender of the cryptograph uses secret keys $p$ and $q$ having at least a predetermined size, and preferably, having at least 384 bits to protect $n$ from being factorized in prime factors.

As described above, it is necessary to perform computations on large numerals for encryption and signature in the RSA system, so a large amount of computation is indispensable for encryption and signature.

In order to overcome this drawback, many high-speed algorithms have been developed. Of those, a method based on CRT is widely used due to an effective process of an exponentiation of the secret key $d$. An RSA signature scheme based on CRT is performed according to Formula (1).

$$S = u_p S_p + u_q S_q \bmod n$$
$$= q(q^{-1} \bmod p)S_p + p(p^{-1} \bmod q)S_q \bmod N \qquad ...:(1)$$

Here, $S_p = M^{d_p} \bmod p$, $S_q = M^{d_q} \bmod q$, $d_p = d \bmod(p - 1)$, and $d_q = d \bmod (q-1)$.

However, such an RSA system using CRT is vulnerable to fault cryptanalysis. Fault cryptanalysis which has lately attracted attention is a method of intentionally causing faults to occur in hardware or software by, for example, flowing overcurrent in an apparatus during operation of an IC card or processor and detecting particular secret information using output fault values. There are approaches of fault cryptanalysis proposed by Boneh and Lenstra.

An approach of fault cryptanalysis proposed by Boneh is based on a theory that when either $S_p$ or $S_q$ is not a correct value during signature generation based on the CRT, $n$ can be factorised in prime factors using two signatures (one correct signature and one faulty signature) with respect to a single message. Accordingly, this approach needs two signatures, i.e. a signature having a fault and a signature having no fault, with respect to a single message. The following description concerns the detailed processes of this approach.

It is assumed that a correct signature is $S = u_p S_p + u_q S_q \bmod n$ and a fault occurs in $S_q$ during computation of the signature, which results in $\hat{S}_q$. Here, $S - \hat{S} = (u_p S_p + u_q S_q) - (u_p S_p + u_q \hat{S}_q) = u_q(S_q - \hat{S}_q)$, so $\gcd(N, S - \hat{S}) = \gcd(n, u_q (S - \hat{S})) = p$. As a result, the secret key $p$ can be detected. Here, gcd indicates a greatest common divisor.

An approach of fault cryptanalysis proposed by Lenstra allows fault cryptanalysis to be accomplished using only one faulty signature. Specifically, it is assumed that a fault occurs during computation of a signature using CRT

and $S_q \neq M^{dq} . mod_q$. Although $M - \hat{S}^e \bmod p = M - S_p^e \bmod p = 0 \bmod p$,

$$M - \hat{S}^e \bmod q = M - \hat{S}_q^e \bmod q \neq 0 \bmod q .$$ Consequently, $M - \hat{S}^e$ is a multiple of $p$ but is not a multiple of $q$, so $\gcd(N, M - \hat{S}^e) = p$. Accordingly, the secret key $p$ is detected.

Since fault cryptanalysis on an RSA public-key cryptographic system based on CRT can be performed regardless of the cause of a fault, it is considered as a most powerful fault cryptanalysis approach. In order to protect against such fault cryptanalysis, the following various algorithms have been developed.

Since CRT fault cryptanalysis is based on the assumption that a fault has occurred in $S_p$ or $S_q$, it is checked whether a fault has occurred during generation of a signature by computing $S_p$ or $S_q$ two times or using a verification function, and a signature is generated again when a fault has occurred, thereby protecting against an attacker. However, this approach requires a large amount of computation, so it is inefficient. Moreover, in the case of a system having a permanent fault, there is no way of verifying whether a fault has occurred during generation of a signature.

In another approach, an original message $M = S^e \bmod n$ is restored through signature verification with respect to a signature value, and it is checked whether a fault has occurred. In this approach, an exponentiation of a large number is performed, so a large amount of computation is required, resulting in inefficiency. Moreover, in the case of a system having a permanent fault, there is no way of verifying whether a fault has occurred during generation of a signature.

Shamir proposes a method of generating a signature according to $S_p = M^d \bmod pr$ and $S_q = M^d \bmod qr$ in U.S. Patent No. 5,991,415. According to the method, if $S_p \neq S_q \bmod r$, it is determined that a fault has occurred in generation of a signature, so a signature is generated again. If $S_p = S_q \bmod r$, it is determined that no fault has occurred in generation of a signature, so a signature is generated according to $S = u_p (S_p \bmod p) + u_q (S_q \bmod q) \bmod n$.

However, the method proposed by Shamir has the following problems. First, the probability of a fault that cannot be theoretically detected is $1/r$. Here, if a large $r$ is selected, a probability of a fault that cannot be detected can be reduced, and operating efficiency decreases because a modular computation on large numeral must be performed. In contrast, if a small $r$ is selected, operating efficiency increases, and the probability of a fault that cannot be detected increases, threatening security.

Second, a protection scheme such as Shamir's method using a checking procedure is fundamentally vulnerable to hardware fault cryptanalysis and cannot be flexibly extended when new fault cryptanalysis is suggested.

Third, since the number of modulars extends from $p$ or $p$ to $pr$ or $qr$ during computation, the method is not compatible with existing systems. As security changes, the size of $r$ needs to be newly determined.

Besides the above approaches, various methods have been proposed by many researchers including Yen. However, in most of them, computation is complicated and the amount of computation increases, or a parameter to be managed in secret is added, which is not compatible with existing systems.

Concepts of fault infective CRT computation and recombination are proposed in *SUNG-MING YEN; SEUNGJOO KIM; SEONGAN LIM; SANGJAE MOON:RSA speedup with residue number system immune against hardware fault cryptanalysis' INFORMATION SECURITY AND CRYPTOLOGY - ICISC 2001. 4TH INTERNATIONAL CONFERENCE. PROCEEDINGS (LECTURE NOTES IN COMPUTER SCIENCE VOL. 2288), SPRINGER-VERLAG, 7 December 2001 (2001-12-07), pages 397-413, XP002233842 Seoul, South Korea ISBN: 3-540-43319-8.*

Preferred embodiments of the present invention aim to provide a digital signature method which does not require a new parameter, thereby allowing the method to be compatible with existing systems, decreases the amount of computation required, and provides protection against fault cryptanalysis.

Another aim is to provide a digital signature apparatus for performing the above method.

Another aim is to provide a computer-readable recording medium on which a program for realizing the above method is recorded

According to one aspect of the present invention, there is provided a digital signature method using Rivest, Shamir and Adelman (RSA) public-key cryptography based on Chinese Remainder Theorem (CRT) using prime numbers $p$ and $q$ as secret keys, $n$ satisfying $n = pq$ as a public key, a predetermined integer $e$ which is a relative prime to an Euler's totient function, $\phi(n)$ as another public key, and $d$ satisfying $e \cdot d = 1 \bmod \phi(n)$ as another secret key, the digital signature method comprising the steps of:

(a) computing x satisfying $x \cdot q = 1 \bmod p$, $d_p$ by performing a modular computation on $d$ and $(p-1)$, and $S_p$ by performing a modular computation on $p$ and a message $M$ to the power of $d_p$;

(b) computing $y$ satisfying $y \cdot p = 1 \bmod q$, $d_q$ by performing a modular computation on $d$ and $(q-1)$, and $S_q$ by performing a modular computation on $q$ and a message $M$ to the power of $d_q$;

(c) when all of the secret keys, the public keys, $S_q$, and the message $M$ are predetermined values which do not have a fault, outputting a proving value T1 whose bits are all in a first logic state, and when all of the secret keys, the public keys, $S_p$, and the message $M$ are predetermined values which do not have a fault, outputting a proving value T2 whose bits are all in a first logic state;

(d) computing S1 by multiplying a first middle value by $x$ and $S_p$, which middle value is obtained by performing an operation *on q* and T2 using a first operator;

(e) computing S2 by multiplying a second middle value by $y$ and $S_q$, which second middle value is obtained by performing an operation on $p$ and *T1* using the first operator; and

(f) outputting a signature S obtained by summing S1 and the result of performing a modular computation on S2 and $n$.

Preferably:

said step (d) is carried out when all of the bits of the proving value *T2* are in the first logic state;

said step (e) is carried out when all of the bits of the proving value *T1* are in the first logic state;

said step (f) is carried out when all of the bits of the proving values *T1* and *T2* are in the first logic state; and

the method comprises the further step of outputting a fault message when at least one of the bits of the proving values *T1* and *T2* is not in the first logic state.

Preferably, steps (a) and (b) are performed in parallel, and steps (d) and (e) are performed in parallel.
Preferably, the proving values *T1* and *T2* have a same value of *T*, and step (c) comprises the steps of:

(c1) computing *T1*, by subtracting a value, which is obtained by performing a modular computation on $S_q$ of the power of $e$ and $q$, from the message *M*;
(c2) computing *T2* by subtracting a value, which is obtained by performing a modular computation on $S_p$ of the power of $e$ and $p$, from the message *M*; and
(c3) computing *T* by performing an operation on *T1* and *T2* using the first operator.

Preferably, steps (c1) and (c2) are performed in parallel.
Preferably, the first operator is an exclusive OR operator, an addition operator, or subtraction operator.
According to another aspect of the present invention, there is provided a digital signature apparatus using Rivest, Shamir and Adelman (RSA) public-key cryptography based on Chinese Remainder Theorem (CRT) using prime numbers $p$ and $q$ as secret keys, $n$ satisfying $n = pq$ as a public key, a predetermined integer $e$ which is a relatively prime to an Euler's totient function, $\phi(n)$ as another public key, and $d$ satisfying $e \cdot d = 1 \bmod \phi(n)$ as another secret key, the digital signature apparatus comprising:

first computation means for computing x satisfying $x \cdot q = 1 \bmod p$, $d_p$ by performing a modular computation on $d$ and ($p$-1), and $S_p$ by performing a modular computation on $p$ and a message $M$ to the power of $d_p$;

second computation means for computing $y$ satisfying $y \cdot p = 1 \bmod q$, $d_q$ by performing a modular computation on $d$ and ($q$-1), and $S_q$ by performing a modular computation *on q* and a message $M$ to the power of $d_q$;

proving value output means for outputting a proving value *T1* whose bits are all in a first logic state, when all of the secret keys, the public keys, and $S_q$ output from the second computation means, and the message $M$ are predetermined values which do not have a fault, and outputting a proving value T2 whose bits are all in a first logic state, when all of the secret keys, the public keys, and $S_p$ output from the first computation means, and the message $M$ are predetermined values which do not have a fault;

third computation means for computing S1 by multiplying a first middle value by x and $S_p$, which middle value is obtained by performing an operation on $q$ and T2 output from the proving value output means, using a first operator;

fourth computation means for computing S2 by multiplying a second middle value by $\gamma$ and $S_q$, which second middle value is obtained by performing an operation on $p$ and *T1* output from the proving value output means, using the first operator; and

digital signature output means for outputting a signature $S$ obtained by summing $S1$ output from the third computation means and the result of performing a modular computation on $n$ and $S2$ output from the fourth computation means.

Preferably, the apparatus further comprises fault message output means for outputting a fault message when at least one of the bits of the proving values $T1$ and $T2$ utput from the proving value output means is not in the first logic state, wherein the digital signature output means outputs the fault message instead of the signature $S$ when the fault message is output from the fault message output means.

Preferably, the first and second computation means operate in parallel, and the third and fourth computation means operate in parallel.

Preferably, the proving values $T1$ and $T2$ have a same value $T$, and the proving value output means comprises:

first means for computing $T1$ by subtracting a value, which is obtained by performing a modular computation on $S_q$ of the power of $e$ and $q$, from the message $M$;

second means for computing $T2$ by subtracting a value, which is obtained by performing a modular computation on $S_p$ of the power of $e$ and $p$, from the message $M$; and

third means for computing $T$ by performing an operation on $T1$ and $T2$ using the first operator.

Preferably, the first means and the second means operate in parallel.

Preferably, the first operator is an exclusive OR operator, an addition operator, or a subtraction operator.

According to another aspect of the present invention, there is provided a computer-readable recording medium on which a program for executing a digital signature method according to any of the preceding aspects of the invention is recorded.

For a better understanding of the invention, and to show how embodiments of the same may be carried into effect, reference will now be made, by way of example, to the accompanying diagrammatic drawings, in which:

Figure 1 is a flowchart of a digital signature method performed in parallel according to one embodiment of the present invention;

Figure 2 is a flowchart of a digital signature method performed in serial according to another embodiment of the present invention;

Figure 3 is a block diagram of a digital signature apparatus according to one embodiment of the present invention; and

Figure 4 is a block diagram of a digital signature apparatus according to another embodiment of the present invention.

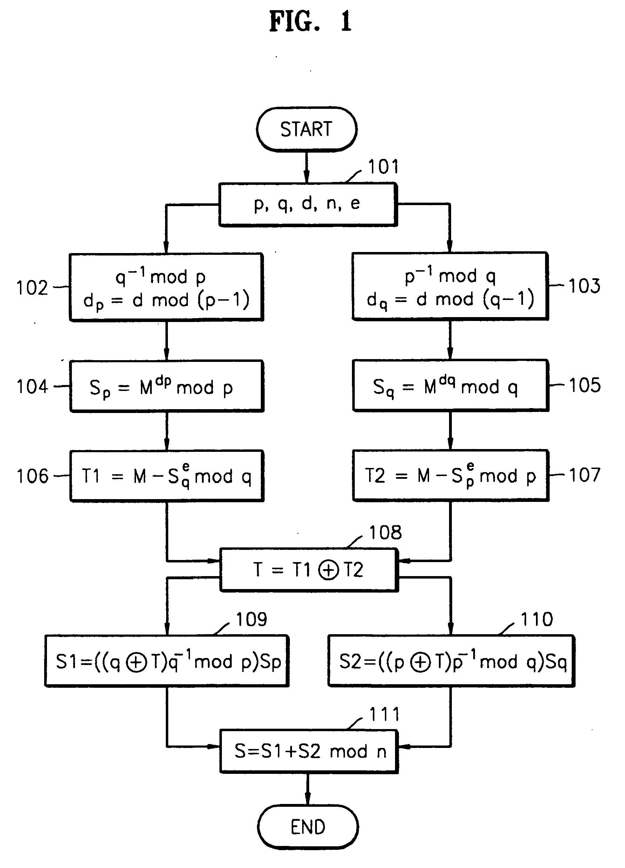

Figure 1 is a flowchart of a digital signature method according to a first embodiment of the present invention. Considering that existing fault cryptanalysis is based on the fact that a fault occurs in either $S_p$ or $S_q$, this example of the present invention extends a fault throughout generation of a signature even if the fault occurs in only one of $S_p$ and $S_q$, to prohibit an attacker using fault cryptanalysis from deriving a formula which can attack a secret key.

In the digital signature method according to the first embodiment, secret keys $p$, $q$, and $d$ and public keys $n$ and $e$ are input in step 101. Here, $p$ and $q$ are prime numbers, $n = pq$, $e$ is a random integer which is a relative prime to an Euler's totient function, $\phi(n)$, and $d$ is a numeral satisfying $e \cdot d = 1 \mod \phi(n)$. The secret keys and the public keys may be stored in advance or externally input for encryption.

The secret keys $p$, $q$, and $d$ and the public keys $n$ and $e$ are used to calculate $q^{-1} \mod p$, $d_p = d \mod(p - 1)$, $p^{-1} \mod q$, and $d_q = d \mod(q - 1)$ in steps 102 and 103 and to calculate $S_p = M^{d_p} \mod p$ and $S_q = M^{d_p} \mod q$ in steps 104 and 105. As shown in Figure 1, the calculations are performed in parallel. In addition, the above calculations may be performed during digital signature, but the results of the calculations may be stored in advance and used during digital signature.

Preferred embodiments of the present invention intentionally make a fault pervade all of the $S_p$, $S_q$, secret key and public keys when the fault actually occurs in even one of them so that an attacker using fault cryptanalysis is prohibited from deriving a formula which can attack a secret key. For example, when a fault occurs only in the $S_q$, the fault is induced into the other terms to protect the secret key $p$. Accordingly, this example of the present invention provides Formula (2).

$$S = (q \oplus \textit{proving value for correct } S_q)(q^{-1} \bmod p)S_p$$
$$+ (p \oplus \textit{proving value for correct } S_p)(p^{-1} \bmod q)S_q \bmod n \qquad ...(2)$$

Here, $\oplus$ indicates a mathematical operator, and it is preferable to use an exclusive OR (XOR). Alternately, the operator may be "+" or "-", or any operator which allows a first logic state to be output when corresponding bits are the same in a digital operation and allows a second logic state to be output when corresponding bits are not the same can be used. It is preferable that the first logic state indicates a logic low state or 0, and the second logic state indicates a logic high state or 1.

As shown in Formula (2), a first computation is performed on $q$ and the proving value for correct $S_q$. Here, if the value of $S_q$ is correctly generated, 0 is output as the proving value when $\oplus$ indicates an XOR.

If there is a fault in $S_q$, a value other than 0 is output as the proving value. As a result, $(q^{-1} \bmod p)S_p$ is multiplied by not $q$ but another value, so the fault occurring in $S_q$ is spread to the term including $S_p$. The above computation is applied to a computation performed on $p$ and the proving value for correct $S_p$ in the same manner.

In Formula (2), the proving value for correct $S_q$ is obtained by a formula according to which not 0 but another value is output when a fault occurs in $S_q$, and the proving value for correct $S_p$ is obtained by a formula according to which not 0 but another value is output when a fault occurs in $S_p$. The two proving values may be the same or different and are preferably obtained according to Formula (3).

$$T = T1 \oplus T2$$
$$= (M - S_q^e \bmod q) \oplus (M - S_p^e \bmod p) \qquad ...(3)$$

Referring to Figure 1, $T1$ and $T2$ are calculated in parallel in steps 106 and 107, and a computation is performed on $T1$ and $T2$ using the operator $\oplus$ in step 108.

$T$ calculated in step 108 is used in steps 109 and 110. $S1$ and $S2$ are calculated in steps 109 and 110, respectively, and are used in step 111 to output a digital signature value $S$ according to a computation expressed by Formula (4).

$$S = ((q \oplus T)q^{-1} \bmod p)S_p + ((p \oplus T)p^{-1} \bmod q)S_q \bmod n$$
$$= ((q \oplus (M - S_q^e \bmod q) \oplus (M - S_p^e \bmod p))q^{-1} \bmod p)S_p \qquad ...(4)$$
$$+ ((p \oplus (M - S_p^e \bmod p) \oplus (M - S_q^e \bmod q))p^{-1} \bmod q)S_q \bmod n$$

In the above computation, when $Sp$ and $Sq$ are normally generated, $M - S_q^e \bmod q = 0$ and $M - S_p^e \bmod p = 0$, so a correct signature is generated. However, when a normal $S_p$ and a faulty $\hat{S}_q^e$ are generated, the value of $M - \hat{S}_q^e \bmod q$ is non-zero, so an abnormal calculation $\hat{T} = M - \hat{S}_q^e$ is performed. As a result, an incorrect signature is output. In this case, the computation is expressed by Formula (5).

$$\hat{S} = ((q \oplus \hat{T})q^{-1} \bmod p)S_p + ((p \oplus \hat{T})p^{-1} \bmod q)\hat{S}_q \bmod n \qquad ...(5)$$

Accordingly, $M - \hat{S}^e$ calculated by an attacker using fault cryptanalysis becomes neither a multiple of $p$ nor a multiple of *q*. As a result, the attacker cannot calculate gcd(*n, M* - $\hat{S^e}$) = *p* and cannot detect a secret key eventually.

In the case where the attacker uses fault cryptanalysis proposed by Boneh, if it is assumed that a correct signature is $S = u_p S_p + u_q S_q \bmod n$ and a signature resulting from fault cryptanalysis is $\hat{S} = \hat{u}_p S_p + \hat{u}_q \hat{S}_q \bmod n$, a formula used by the attacker is not valid, as shown in Formula (6), so the attacker cannot obtain the secret key *p*.

$$S - \hat{S} = (u_p S_p + u_q S_q) - (\hat{u}_p S_p + \hat{u}_q \hat{S}_q) \neq u_q(S_q - \hat{S}_q) \qquad \ldots(6)$$

Although not shown in Figure 1, it may be determined whether the value of *T* calculated in step 108 has only zero bits. If the value of *T* includes at least one non-zero bit, a fault message may be output without performing the following steps.

In other words, only when it is determined that all bits constituting *T* are zero, parallel steps 109 and 110 may be performed and a signature value may be output according to Formula (4) or (5). When it is determined that not all bits constituting T are zero, the computation may not performed and a predetermined fault message may be output.

In the case where not all bits constituting *T* are zero, even one fault in either $S_p$ or $S_q$ is spread throughout the computation so that an attacker using fault cryptanalysis cannot derive a formula which can attack a secret key. Accordingly, it is not necessary to provide the step of outputting a fault message for only the purpose of protecting fault cryptanalysis. However, it is preferable to provide the step of determining whether all bits constituting *T* are zero and outputting a fault message if they are not in order to allow a user to be immediately informed of occurrence of a fault during the computation.

In Figure 1, a digital signature method of one example of the present invention is performed in parallel. The parallel process can decrease computation time by 1/2 as compared to a serial process and is robust to external attacks such as a timing attack and power analysis attack.

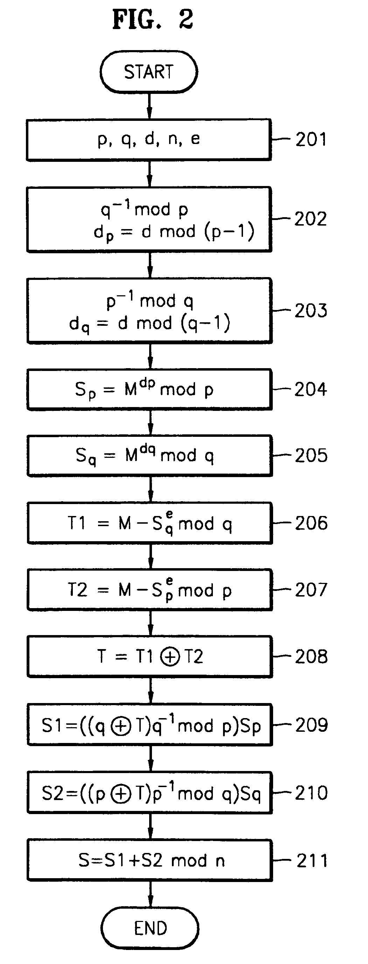

A digital signature method of another example of the present invention may be performed in series. The serial process can reduce hardware space. Figure 2 shows a digital signature method of an example of the present invention performed in series.

The steps of Figure 2 are the same as those of Figure 1, and the step of determining whether all bits constituting *T* are zero and outputting a fault message without performing the following steps if they are not may be further provided after step 208 in the method of Figure 2.

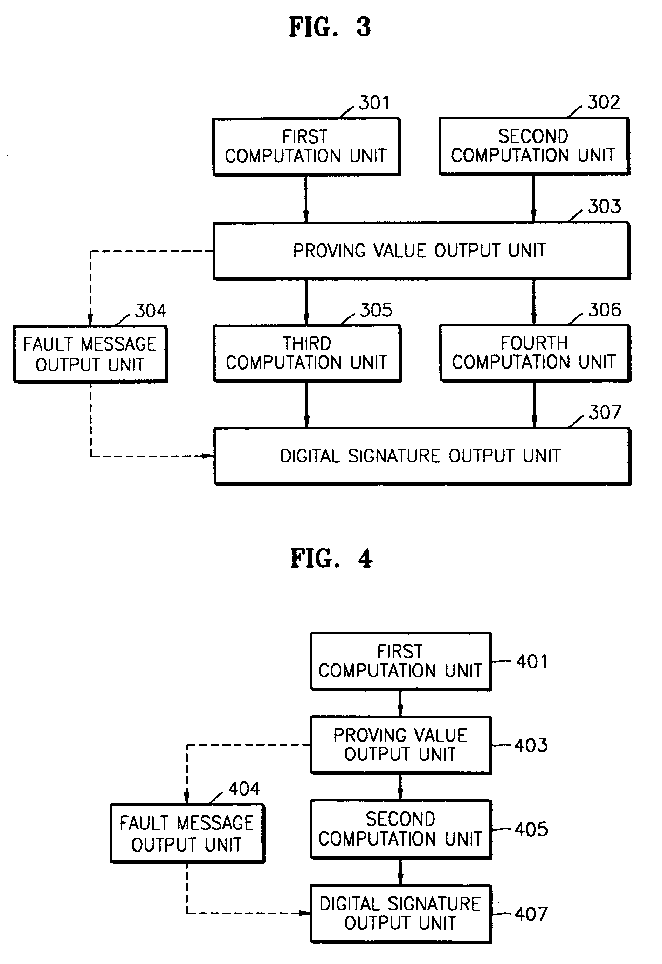

Figure 3 is a block diagram of a digital signature apparatus according to one embodiment of the present invention. The digital signature apparatus includes a first computation unit 301, a second computation unit 302, a proving value output unit 303, a third computation unit 305, a fourth computation unit 306, a fault message output unit 304, and a digital signature output unit 307.

The first computation unit 301 computes $q^{-1} \bmod p$, $d_p = d \bmod(p-1)$, and $S_p = M^{d_p} \bmod p$ using secret keys *p, q,* and *d* and public keys *n* and *e* and outputs the results of computation. The second computation unit 302 computes $p^{-1} \bmod_q$, $d_q = d \bmod(q - 1)$, and $S_q = M^{d_q} \bmod q$ using the secret keys *p, q,* and *d* and the public keys *n* and *e* in parallel with the first computation unit 301 and outputs the results of computation.

The proving value output unit 303 outputs a proving value for a correct $S_q$ and a proving value for a correct $S_p$. The two proving values may be the same or different. For example, the proving value for a correct $S_q$ may be $M - S_q^e \bmod q$, and the proving value for a correct $S_p$ may be $M - S_p^e \bmod p$. Alternatively, the two proving values may be calculated according to Formula (3).

When the proving values output from the proving value output unit 303 are 0, the third computation unit 305 computes $((q \oplus T)q^{-1} \bmod p)S_p$ and the fourth computation unit 306 computes $((p \oplus T)p^{-1} \bmod q)S_q$. Then, the digital signature output unit 307 performs a computation expressed by Formula (4) using the output values of the third and fourth computation units 305 and 306.

When the proving values output from the proving value output unit 303 are non-zero, the fault message output unit 304 prevents a signature value from being output from the digital signature output unit 307 and outputs a fault message to inform a user of occurrence of a fault during signature.

As described above with reference to Figures 1 and 2, even if the fault message output unit 304 is not provided, when a fault occurs during computation, the fault is spread throughout the signature output from the digital signature output unit 307, thereby protecting a secret key from being detected by an attacker using fault cryptanalysis. Accordingly, in terms of the objective of protecting against fault cryptanalysis, the objective of preferred embodiments of the present invention can be achieved without the fault message output unit 304.

In the case where the fault message output unit 304 is not provided in Figure 3, even though not all of the bits of each of the proving values $T$ output from the proving value output unit 303 are zero, the third computation unit 305 and the fourth computation unit 306 compute $((q \oplus T)q^{-1} \bmod p)S_p$ and $((p \oplus T)p^{-1} \bmod q)S_q$, respectively, and the digital signature output unit 307 performs computation expressed by Formula (4) using the computed values from the third and fourth computation units 305 and 306 to output a digital signature throughout which a fault is spread.

In Figure 3, a digital signature apparatus of an example of the present invention is configured in parallel but another example may be configured in series. Figure 4 is a block diagram of a digital signature apparatus configured in series according to another embodiment of the present invention. The digital signature apparatus of Figure 4 includes a first computation unit 401, a proving value output unit 403, a second computation unit 405, a digital signature output unit 407, and a fault message output unit 404.

The first computation unit 401 performs computations performed in the first and second computation units 301 and 302 of Figure 3, that is, computes $q^{-1} \bmod p$, $d_p = d \bmod(p - 1)$, $S = M^{d_p} \bmod p$, $p^{-1} \bmod q$, $d_q = d \bmod(q - 1)$, and $S_q = M^{d_q} \bmod q$ in series using secret keys $p$, $q$, and $d$ and public keys $n$ and $e$. A series of the computations can be performed in any order in which $d_p$ is computed before $S_p$ and $d_q$ is computed before $S_q$.

The proving value output unit 403 performs the same function as the proving value output unit 303.

The second computation unit 405 performs computations performed in the third and fourth computation units 305 and 306 of Figure 3, that is, computes $((q \oplus T)q^{-1} \bmod p)S_p$ and $((p \oplus T)p^{-1}\bmod_q)S_q$ in series. Here, the computations can be performed in random order.

Then, the digital signature output unit 407 performs a computation expressed by Formula (4) using the output values of the second computation units.

When the proving values output from the proving value output unit 403 are non-zero, the fault message output unit 404 prevents a signature value from being output from the digital signature output unit 407 and outputs a fault message to inform a user of occurrence of a fault during signature. As described above, even if the fault message output unit 404 is not provided and a digital signature having a fault is output, the digital signature can be protected from fault cryptanalysis.

Preferred methods of the present invention can be realized as a code which is recorded on a computer readable recording medium and can be read by a computer. The computer readable recording medium may be any type on which data which can be read by a computer system can be recorded, for example, a ROM, a RAM, a CD-ROM, a magnetic tape, a floppy disc, or an optical data storage device. Examples of the present invention can also be realized by way of carrier waves (for example, transmitted through the Internet). Alternatively, computer readable recording media may be distributed among computer systems connected through a network so that embodiments of the present invention can be realized as a code which is stored in the recording media and can be read and executed in the computers.

Preferred embodiments of the invention have been particularly shown and described. However, the present invention is not limited to the preferred embodiments but, for example, can be applied to cases including an exponentiation of a secret key $d$, that is, any case to which CRT can be applied. For example, a procedure of decoding a cryptograph C using an RSA system uses a computation $M = C^d \bmod n$, so an example of the present invention can be applied to this procedure.

A digital signature method and apparatus using RSA public-key cryptography based on the CRT according to preferred embodiments of the present invention has the following advantages.

First, the method or apparatus is completely compatible with existing systems without changing the structures of essential computing engines (modulars) and can protect against any existing fault cryptanalysis. Accordingly, a random number $r$ used in a method proposed by Shamir is not necessary, and there is no probability of occurrence of a fault.

Second, as compared to a conventional CRT method, there is an additional exponentiation of a public key $e$, but the amount of computation increases very slightly when the public key $e$ is small. Actually, $e$ is very small. Even in the case where $e = d$, the amount of additional computations $M - S_q^e \bmod q$ and $M - S_p^e \bmod p$ is similar to the amount of one CRT computation, so the amount of computation increases by only about 1/2 of the amount of computations in an RSA system not using the CRT.

Third, since a checking process is not performed, apprehension of fault cryptanalysis is fundamentally removed. Even a hardware fault or permanent fault also causes a faulty signature to be generated, protecting secret information from being revealed.

In this specification, the verb "comprise" has its normal dictionary meaning, to denote non-exclusive inclusion. That is, use of the word "comprise" (or any of its derivatives) to include one feature or more, does not exclude the possibility of also including further features.

**Claims**

1. A digital signature method using Rivest, Shamir and Adelman RSA public-key cryptography based on the Chinese Remainder Theorem CRT using prime numbers $p$ and $q$ as secret keys, $n$ satisfying $n = pq$ as a public key, a predetermined integer $e$ which is a relative prime to an Euler's totient function, $\phi(n)$ as another public key, and $d$ satisfying $e \cdot d = 1 \bmod \phi(n)$ as another secret key, the digital signature method comprising the steps of:

   a) computing x satisfying $x \cdot q = 1 \bmod p$, $d_p$ by performing a modular computation on $d$ and $(p\text{-}1)$, and $S_p$ by performing a modular computation on $p$ and a message $M$ to the power of $d_p$;

   b) computing $y$ satisfying $y \cdot p = 1 \bmod q$, $d_q$ by performing a modular computation on $d$ and $(q\text{-}1)$, and $S_q$ by performing a modular computation on $q$ and a message $M$ to the power of $d_q$;

   c) when all of the secret keys, the public keys, $S_q$, and the message $M$ are predetermined values which do not have a fault, outputting a proving value $T1$ whose bits are all in a first logic state, and when all of the secret keys, the public keys, $S_p$, and the message $M$ are predetermined values which do not have a fault, outputting a proving value T2 whose bits are all in a first logic state;

   d) computing $S1$ by multiplying a first middle value by x and $S_p$, which middle value is obtained by performing an operation on $q$ and T2 using a first operator;

   e) computing $S2$ by multiplying a second middle value by $y$ and $S_q$, which second middle value is obtained by performing an operation on $p$ and $T1$ using the first operator; and

   f) outputting a signature $S$ obtained by summing $S1$ and the result of performing a modular computation on $S2$ and $n$.

2. A digital signature method according to claim 1, wherein:

   said step d) is carried out when all of the bits of the proving value $T2$ are in the first logic state;
   said step e) is carried out when all of the bits of the proving value $T1$ are in the first logic state;
   said step f) is carried out when all of the bits of the proving values $T1$ and $T2$ are in the first logic state; and

   the method comprises the further step of outputting a fault message when at least one of the bits of the proving values $T1$ and $T2$ is not in the first logic state.

3. A digital signature method according to claim 1 or 2, wherein steps a) and b) are performed in parallel, and steps d) and e) are performed in parallel.

4. A digital signature method according to claim 1, 2 or 3, wherein the proving values $T1$ and $T2$ have a same value of $T$, and step c) comprises the steps of :

   c1) computing $T1$ by subtracting a value, which is obtained by performing a modular computation on $S_q$ of the power of $e$ and $q$, from the message $M$;
   c2) computing $T2$ by subtracting a value, which is obtained by performing a modular computation on $S_p$ of the power of $e$ and $p$, from the message $M$; and
   c3) computing T by performing an operation on $T1$ and $T2$ using the first operator.

5. A digital signature method according to claim 4, wherein steps c1) and c2) are performed in parallel.

6. A digital signature method according to any of the preceding claims, wherein the first operator is an exclusive OR operator, an addition operator, or subtraction operator.

7. A digital signature apparatus using Rivest, Shamir and Adelman RSA public-key cryptography based on the Chinese Remainder Theorem CRT using prime numbers $p$ and $q$ as secret keys, $n$ satisfying $n = pq$ as a public key, a predetermined integer $e$ which is a relatively prime to an Euler's totient function, $\phi(n)$ as another public key, and $d$ satisfying $e \cdot d = 1 \bmod \phi(n)$ as another secret key, the digital signature apparatus comprising:

   first computation means (301) for computing $x$ satisfying $x \cdot q = 1 \bmod p$, $d_p$ by performing a modular computation on $d$ and $(p\text{-}1)$, and $S_p$ by performing a modular computation on $p$ and a message $M$ to the power of $d_p$;
   second computation means (302) for computing $y$ satisfying $y \cdot p = 1 \bmod q$, $d_q$ by performing a modular computation on $d$ and $(q\text{-}1)$, and $S_q$ by performing a modular computation on $q$ and a message $M$ to the power of $d_q$;

proving value output means (303) for outputting a proving value $T1$ whose bits are all in a first logic state, when all of the secret keys, the public keys, and $S_q$ output from the second computation means (302), and the message $M$ are predetermined values which do not have a fault, and outputting a proving value $T2$ whose bits are all in a first logic state, when all of the secret keys, the public keys, and $S_p$ output from the first computation means, and the message $M$ are predetermined values which do not have a fault;

third computation means (305) for computing $S1$ by multiplying a first middle value by $x$ and $S_p$, which middle value is obtained by performing an operation on $q$ and $T2$ output from the proving value output means, using a first operator;

fourth computation means (306) for computing $S2$ by multiplying a second middle by $y$ and $S_q$, which second middle value is obtained by performing an operation on $p$ and $T1$ output from the proving value output means, using the first operator; and

digital signature output means (307) for outputting a signature $S$ obtained by summing $S1$ output from the third computation means and the result of performing a modular computation on $n$ and $S2$ output from the fourth computation means.

8. A digital signature apparatus according to claim 7, further comprising fault message output means (304) for outputting a fault message when at least one of the bits of the proving values $T1$ and $T2$ output from the proving value output means (303) is not in the first logic state, wherein the digital signature output means (307) outputs the fault message instead of the signature $S$ when the fault message is output from the fault message output means (304).

9. A digital signature apparatus according to claim 7 or 8, wherein the first and second computation means (301, 302) are adapted to operate in parallel, and the third and fourth computation means (305, 306) are adapted to operate in parallel.

10. A digital signature apparatus according to claim 7, 8 or 9, wherein the proving values $T1$ and $T2$ have a same value $T,$ and the proving value output means (303) comprises:

   first means for computing $T1,$ by subtracting a value, which is obtained by performing a modular computation on $S_q$ of the power of $e$ and $q$, from the message $M;$

   second means for computing $T2$ by subtracting a value, which is obtained by performing a modular computation on $S_p$ of the power of $e$ and $p$, from the message $M;$ and

   third means for computing T by performing an operation on $T1$ and $T2$ using the first operator.

11. A digital signature apparatus according to claim 10, wherein the first means and the second means are adapted to operate in parallel.

12. The digital signature apparatus according to any of claims 7 or 11, wherein the first operator is an exclusive OR operator, an addition operator, or a subtraction operator.

13. A computer-readable recording medium on which a program for executing the digital signature method of any of claims 1 to 6 is recorded.

**Patentansprüche**

1. Digitales Signaturverfahren unter Verwendung einer Kryptographie mit öffentlichen Schlüsseln von Rivest, Shamir und Adelman (RSA-Kryptographie mit öffentlichen Schlüsseln) auf der Grundlage des Chinese Remainder Theorem (CRT) unter Verwendung von Primzahlen $p$ und $q$ als geheime Schlüssel, $n,$ das $n = pq$ erfüllt, als ein öffentlicher Schlüssel, einer vorbestimmten ganzen Zahl $e$, die zu einer Eulerschen Totientenfunktion relativ prim ist, $\phi(n)$ als ein anderer öffentlicher Schlüssel und $d$, das $e \cdot d = 1 mod\ \phi(n)$ erfüllt, als ein anderer geheimer Schlüssel, mit den folgenden Schritten:

   a) Berechnen von x, das $x \cdot q = 1 mod\ p$ , $d_p$ erfüllt, durch Ausführen einer Modulberechnung an d und $(p - 1)$ und $S_p$ durch Ausführen einer Modulberechnung an $p$ und einer Nachricht $M$ in der Potenz $d_p$,
   b) Berechnen von $y$, das $y \cdot p =1 mod\ q$ , $d_q$ erfüllt, durch Ausführen einer Modulberechnung an $d$ und $(q - 1)$ und $S_q$ durch Ausführen einer Modulberechnung an $q$ und einer Nachricht $M$ in der Potenz $d_q$,
   c) Ausgeben eines Prüfwerts $T1,$ dessen Bits alle in einem ersten Logikzustand sind, wenn die geheimen Schlüssel, die öffentlichen Schlüssel, $S_q$ und die Nachricht $M$ alle vorbestimmte Werte sind, die keinen Fehler aufweisen, und Ausgeben eines Prüfwerts T2, dessen Bits alle in einem ersten Logikzustand sind, wenn die geheimen Schlüssel, die öffentlichen Schlüssel, $S_p$ und die Nachricht $M$ alle vorbestimmte Werte sind, die keinen Fehler aufweisen,

d) Berechnen von $S1$ durch Multiplizieren eines ersten Mittelwerts mit $x$ und $S_p$, wobei der Mittelwert durch Ausführen einer Operation an $q$ und $T2$ unter Verwendung eines ersten Operators erhalten wird,

e) Berechnen von $S2$ durch Multiplizieren eines zweiten Mittelwerts mit $y$ und $S_q$, wobei der zweite Mittelwert durch Ausführen einer Operation an $p$ und $T1$ unter Verwendung des ersten Operators erhalten wird, und

f) Ausgeben einer durch Summieren von $S1$ und des Ergebnisses der Ausführung einer Modulberechnung an $S2$ und $n$ erhaltenen Signatur $S$.

2. Digitales Signaturverfahren nach Anspruch 1, bei dem:

   Schritt d) ausgeführt wird, wenn alle Bits des Prüfwerts $T2$ im ersten Logikzustand sind,
   Schritt e) ausgeführt wird, wenn alle Bits des Prüfwerts $T1$ im ersten Logikzustand sind,
   Schritt f) ausgeführt wird, wenn alle Bits der Prüfwerte $T1$ und $T2$ im ersten Logikzustand sind, und

   das Verfahren den weiteren Schritt des Ausgebens einer Fehlermeldung aufweist, wenn mindestens eines der Bits der Prüfwerte $T1$ und $T2$ nicht im ersten Logikzustand ist.

3. Digitales Signaturverfahren nach Anspruch 1 oder 2, bei dem die Schritte a) und b) parallel ausgeführt werden und die Schritte d) und e) parallel ausgeführt werden.

4. Digitales Signaturverfahren nach Anspruch 1, 2 oder 3, bei dem die Prüfwerte $T1$ und $T2$ denselben Wert $T$ aufweisen und Schritt c) die folgenden Schritte aufweist:

   c1) Berechnen von $T1$ durch Subtrahieren eines Werts, der durch Ausführen einer Modulberechnung an $S_q$ in der Potenz $e$ und $q$ erhalten wird, von der Nachricht $M$,
   c2) Berechnen von $T2$ durch Subtrahieren eines Werts, der durch Ausführen einer Modulberechnung an $S_p$ in der Potenz $e$ und $p$ erhalten wird, von der Nachricht Mund
   c3) Berechnen von $T$ durch Ausführen einer Operation an $T1$ und $T2$ unter Verwendung des ersten Operators.

5. Digitales Signaturverfahren nach Anspruch 4, bei dem die Schritte c1) und c2) parallel ausgeführt werden.

6. Digitales Signaturverfahren nach einem der vorstehenden Ansprüche, bei dem der erste Operator ein Exklusiv-ODER-Operator, ein Additionsoperator oder ein Subtraktionsoperator ist.

7. Digitale Signaturvorrichtung unter Verwendung einer Kryptographie mit öffentlichen Schlüsseln von Rivest, Shamir und Adelman (RSA-Kryptographie mit öffentlichen Schlüsseln) auf der Grundlage des Chinese Remainder Theorem (CRT) unter Verwendung von Primzahlen $p$ und $q$ als geheime Schlüssel, $n$, das $n = pq$ erfüllt, als ein öffentlicher Schlüssel, einer vorbestimmten ganzen Zahl $e$, die zu einer Eulerschen Totientenfunktion relativ prim ist, $\phi(n)$ als ein anderer öffentlicher Schlüssel und $d$, das $e \cdot d = 1 \bmod \phi(n)$ erfüllt, als ein anderer geheimer Schlüssel, wobei die digitale Signaturvorrichtung aufweist:

   eine erste Berechnungseinrichtung (301) zum Berechnen von x, das $x \cdot q = 1 \bmod p$ , $d_p$ erfüllt, durch Ausführen einer Modulberechnung an $d$ und $(p - 1)$ und $S_p$ durch Ausführen einer Modulberechnung an $p$ und einer Nachricht $M$ in der Potenz $d_p$,
   eine zweite Berechnungseinrichtung (302) zum Berechnen von $y$, das $y \cdot p = 1 \bmod q$, $d_q$ erfüllt, durch Ausführen einer Modulberechnung an $d$ und $(q - 1)$ und $S_q$ durch Ausführen einer Modulberechnung an $q$ und einer Nachricht $M$ in der Potenz $d_q$,
   eine Prüfwert-Ausgabeeinrichtung (303) zum Ausgeben eines Prüfwerts $T1$, dessen Bits alle in einem ersten Logikzustand sind, wenn die geheimen Schlüssel, die öffentlichen Schlüssel und $S_q$, der von der zweiten Berechnungseinrichtung (302) ausgegeben wurde, und die Nachricht $M$ alle vorbestimmte Werte sind, die keinen Fehler aufweisen, und zum Ausgeben eines Prüfwerts $T2$, dessen Bits alle in einem ersten Logikzustand sind, wenn die geheimen Schlüssel, die öffentlichen Schlüssel und $S_p$, der von der ersten Berechnungseinrichtung ausgegeben wurde, und die Nachricht $M$ alle vorbestimmte Werte sind, die keinen Fehler aufweisen,
   eine dritte Berechnungseinrichtung (305) zum Berechnen von $S1$ durch Multiplizieren eines ersten Mittelwerts mit x und $S_p$, wobei der Mittelwert durch Ausführen einer Operation an $q$ und $T2$, der von der Prüfwert-Ausgabeeinrichtung ausgegeben wurde, unter Verwendung eines ersten Operators erhalten wird,

eine vierte Berechnungseinrichtung (306) zum Berechnen von $S2$ durch Multiplizieren eines zweiten Mittelwerts mit $y$ und $S_q$, wobei der zweite Mittelwert durch Ausführen einer Operation an $p$ und $T1$, der von der Prüfwert-Ausgabeeinrichtung ausgegeben wurde, unter Verwendung des ersten Operators erhalten wird, und eine Digitalsignatur-Ausgabeeinrichtung (307) zum Ausgeben einer durch Summieren von $S1$, der von der dritten Berechnungseinrichtung ausgegeben wurde, und des Ergebnisses der Ausführung einer Modulberechnung an $n$ und $S2$, der von der vierten Berechnungseinrichtung ausgegeben wurde, erhaltenen Signatur $S$.

8. Digitale Signaturvorrichtung nach Anspruch 7, welche weiter aufweist: eine Fehlermeldungs-Ausgabeeinrichtung (304) zum Ausgeben einer Fehlermeldung, wenn mindestens eines der Bits der von der Prüfwert-Ausgabeeinrichtung (303) ausgegebenen Prüfwerte $T1$ und $T2$ nicht im ersten Logikzustand ist, wobei die Digitalsignatur-Ausgabeeinrichtung (307) an Stelle der Signatur $S$ die Fehlermeldung ausgibt, wenn die Fehlermeldung von der Fehlermeldungs-Ausgabeeinrichtung (304) ausgegeben wird.

9. Digitale Signaturvorrichtung nach Anspruch 7 oder 8, wobei die erste und die zweite Berechnungseinrichtung (301, 302) dafür eingerichtet sind, parallel zu arbeiten, und die dritte und die vierte Berechnungseinrichtung (305, 306) dafür eingerichtet sind, parallel zu arbeiten.

10. Digitale Signaturvorrichtung nach Anspruch 7, 8 oder 9, wobei die Prüfwerte $T1$ und $T2$ denselben Wert T aufweisen und die Prüfwert-Ausgabeeinrichtung (303) aufweist:

    eine erste Einrichtung zum Berechnen von $T1$ durch Subtrahieren eines Werts, der durch Ausführen einer Modulberechnung an $S_q$ in der Potenz $e$ und $q$ erhalten wird, von der Nachricht $M$,
    eine zweite Einrichtung zum Berechnen von T2 durch Subtrahieren eines Werts, der durch Ausführen einer Modulberechnung an $S_p$ in der Potenz $e$ und $p$ erhalten wird, von der Nachricht $M$ und
    eine dritte Einrichtung zum Berechnen von T durch Ausführen einer Operation an $T1$ und $T2$ unter Verwendung des ersten Operators.

11. Digitale Signaturvorrichtung nach Anspruch 10, wobei die erste Einrichtung und die zweite Einrichtung dafür eingerichtet sind, parallel zu arbeiten.

12. Digitale Signaturvorrichtung nach einem der Ansprüche 7 oder 11, wobei der erste Operator ein Exklusiv-ODER-Operator, ein Additionsoperator oder ein Subtraktionsoperator ist.

13. Computerlesbares Aufzeichnungsmedium, auf dem ein Programm zum Ausführen des digitalen Signaturverfahrens nach einem der Ansprüche 1 bis 6 aufgezeichnet ist.

**Revendications**

1. Procédé pour la signature numérique utilisant une méthode de cryptographie à clé publique RSA Rivest, Shamir et Adelman, basé sur le théorème CRT Chinesse Remainder Theorem utilisant les nombres premiers $p$ et $q$ en tant que clé secrète, $n$ satisfaisant à la relation $n=pq$ en tant que clé publique, un nombre entier $e$ prédéterminé qui est un nombre premier relatif par rapport à une fonction totient de Euler, $\phi$ (n) en tant que autre clé publique, et $d$ satisfaisant la relation $e.d = 1 \mod \varnothing$ (n) en tant que autre clé secrété, le procédé de signature numérique comprenant les étapes de :

    a) Calculer $x$ satisfaisant $x.q = 1 \mod p$, $d_p$ en réalisant un calcul modulaire sur $d$ et $(p\text{-}1)$, et Sp en réalisant un calcul modulaire sur p et message M à la puissance de $d_p$ ;
    b) Calculer $y$ satisfaisant la relation $y.p = 1 \mod q$, $d_p$ en réalisant un calcul modulaire sur $d$ et $(q\text{-}1)$, et $Sp$ en réalisant un calcul modulaire sur $q$ et un message M à la puissance de $d_p$ ;
    c) Lorsque toutes les clés secrètes, les clés publiques, $S_q$, et le message M sont des valeurs prédéterminées qui ne présentent pas de défaut, délivrer une valeur de preuve T1 dont les bits sont tous dans le premier état logique, et lorsque toutes les clés secrètes, les clés publiques, $S_p$ et le message M sont des valeurs prédéterminées qui ne présentent pas de défaut, délivrer une valeur T2 de preuve dont les bits sont tous dans le premier état logique ;
    d) Calculer S1 en multipliant une première valeur médiane par $x$ et $S_p$, laquelle valeur médiane est obtenue en réalisant une opération sur $q$ et T2 en utilisant un premier opérateur ;
    e) Calculer S2 par multiplication d'une seconde valeur médiane par $y$ et $S_q$, laquelle seconde valeur médiane est obtenue par la réalisation d'une opération sur *p* et T1 en utilisant le premier opérateur ; et
f) Délivrer une signature *S* obtenue par la sommation de S1 et du résultat de la réalisation du calcul modulaire sur S2 et *n.*

2. Procédé de signature numérique selon le revendication 1, **caractérisé en ce que** la dite étape d) est réalisée lorsque tous les bits de la valeur de preuve T2 sont dans leur premier état logique ;

   La dite étape e) est réalisée lorsque tous les bits de la valeur de preuve T1 et T2 sont dans le premier état logique ;
   Le procédé comprenant l'étape supplémentaire de délivrer un message de défaut lorsque au moins un des bits des valeurs de preuve T1 et T2 ne sont pas dans leur premier état logique.

3. Procédé de signature numérique selon la revendication 1 ou 2, **caractérisé en ce que** les étapes a) et b) sont réalisées en parallèle, et les étapes d) et e) sont réalisées en parallèle.

4. Procédé de signature numérique selon l'une des revendications 1, 2 ou 3, **caractérisé en ce que** les valeurs de preuve T1 et T2 présentent une même valeur de T, et l'étape c) comporte les étapes de :

   c1) calculer T1 par la soustraction d'une valeur qui est obtenue par réalisation d'un calcul modulaire sur $S_q$ à la puissance de *e* et *q*, à partir du message M ;
   c2) calculer T2 en soustraction d'une valeur qui est obtenue par la réalisation d'un calcul modulaire sur $S_p$ à la puissance de *e* et *p*, à partir du message M ; et
   c3) calculer T par la réalisation d'une opération sur T1 et T2 en utilisant le premier opérateur.

5. Procédé de signature numérique selon la revendication 4, **caractérisé en ce que** l'étape c1) et l'étape c2) sont réalisées en parallèle.

6. Procédé de signature numérique selon l'une des revendications précédentes, **caractérisé en ce que** le premier opérateur est un opérateur OU exclusif, un opérateur d'addition, ou un opérateur de soustraction.

7. Appareil de signature numérique en l'utilisant la cryptographie à clé publique RSA Rivest, Shamir et Adelman basée sur le théorème CRT Chinese Remainder Theorem, en utilisant des nombres premiers *p* et *q* en tant que clés secrètes, "*n*" satisfaisant à la relation n = pq en tant que clé publique, un nombre entier "*e*" prédéterminé qui est relativement premier par rapport à une fonction totient de Euler, $\phi(n)$ en tant que autre clé publique, et satisfaisant la relation *e.d* = 1 mod $\phi(n)$ en tant que autre clé secrète, l'appareil de signature numérique comprenant :

   - des premiers moyens de calcul (301) pour le calcul de *x* satisfaisant *x.q* = 1 mod p, en réalisant un calcul modulaire sur *d* et (*p-1*), et $S_p$ en réalisant un calcul modulaire sur *p* et un message M à la puissance de $d_p$ ;
   - des seconds moyens de calcul (302) pour calculer y satisfaisant la relation *y.p* = 1 mod *q*, $d_q$ en réalisant un calcul modulaire sur *d* et (*q-1*), et $S_q$ en réalisant un calcul modulaire sur *q* et un message M à la puissance de $d_q$ ;
   - des moyens de délivrance d'une valeur de preuve (303) pour délivrer une valeur de preuve T1 dont les bits sont tous en leur premier état logique, lorsque toutes les clés secrètes, les clés publiques, et $S_q$ délivré par les seconds moyens de calcul (302) et le message M sont des valeurs prédéterminées qui ne présentent pas de défaut, et délivrer une valeur de preuve T2 dont les bits sont tous dans un premier état logique, lorsque toutes les clés secrètes, les clés publiques, et $S_q$ délivré à partir des premiers moyens de calcul, et message M sont des valeur prédéterminées qui ne présentent pas de défaut ;
   - des troisièmes moyens de calcul (305) pour calculer S1 en multipliant une première valeur médiane par x et $S_p$, laquelle valeur médiane est obtenue par réalisation d'une opération sur *q* et T2 délivré par les moyens de délivrance de valeur de preuve, en utilisant un premier opérateur ;
   - des quatrièmes moyens de calcul (306) pour calculer S2 en multipliant une seconde valeur moyenne par *y* et $S_q$, laquelle seconde valeur médiane étant obtenue par réalisation d'une opération sur *p* et T délivré par les moyens de délivrance de valeur de preuve en utilisant le premier opérateur ;
   - des moyens de délivrance de signature numérique (307) pour délivrer une signature S obtenue par la sommation de S1 délivré à partir des troisièmes moyens de calcul et le résultat de la réalisation d'un calcul modulaire sur *n* et S

   délivré par les quatrièmes moyens de calcul.

8. Appareil de signature numérique selon la revendication 7, **caractérisé en ce qu'**il comporte en outre des moyens (304) de délivrance de message de défaut, pour délivrer un message de défaut lorsque au moins un des bits des valeurs de preuve T1 et T2 délivrées par les moyens de délivrance (303) de valeur de preuve ne sont pas dans le premier état logique, tandis que les moyens de délivrance (307) de signature numérique délivrent le message de défaut à la place d'une signature S lorsque le message de défaut est délivré par les moyens de délivrance de message de défaut (304).

9. Appareil de signature numérique selon la revendication 7 ou 8, **caractérisé en ce que** les premier et second moyens de calcul (301, 302) sont aptes à fonctionner en parallèle, et les troisième et quatrième moyens de calcul (305, 306) sont aptes à fonctionner en parallèle.

10. Appareil de signature numérique selon la revendication 7, 8 ou 9, **caractérisé en ce que** les valeurs de preuve T1 et T2 présentent la même valeur T, et les moyens (303) de délivrance de valeurs de preuve comportent :

   - des premiers moyens pour calculer T1 par la soustraction d'une valeur, qui est obtenue en réalisant un calcul modulaire sur $S_q$ à la puissance de $e$ et $q$, à partir du message M ;
   - des seconds moyens pour calculer T2 en soustrayant une valeur, qui est obtenue par la réalisation d'un calcul modulaire sur $S_q$ à la puissance de $e$ et $p$, à partir du message M ; et
   - des troisièmes moyens pour calculer T1 en réalisant un calcul sur T1 et T2 en utilisant le premier opérateur.

11. Appareil de signature numérique selon la revendication 10, **caractérisé en ce que** les premiers moyens et seconds moyens sont aptes à fonctionner en parallèle.

12. Appareil de signature numérique selon l'une des revendications 7 à 11, **caractérisé en ce que** le premier opérateur est un opérateur OU exclusif, un opérateur d'addition ou un opérateur de soustraction.

13. Milieu d'enregistrement susceptible d'être lu par ordinateur sur lequel un programme, pour l'exécution du procédé de signature numérique selon l'une des revendications 1 à 6, est enregistré.

## FIG. 1

START

101 — p, q, d, n, e

102 —
$$q^{-1} \bmod p$$
$$d_p = d \bmod (p-1)$$

$$p^{-1} \bmod q$$
$$d_q = d \bmod (q-1)$$
— 103

104 — $S_p = M^{d_p} \bmod p$

$S_q = M^{d_q} \bmod q$ — 105

106 — $T1 = M - S_q^e \bmod q$

$T2 = M - S_p^e \bmod p$ — 107

108 — $T = T1 \oplus T2$

109 — $S1 = ((q \oplus T)\bar{q}^{-1} \bmod p)S_p$

$S2 = ((p \oplus T)\bar{p}^{-1} \bmod q)S_q$ — 110

111 — $S = S1 + S2 \bmod n$

END

# FIG. 2

START

$p, q, d, n, e$ —201

$q^{-1} \bmod p$
$d_p = d \bmod (p-1)$ —202

$p^{-1} \bmod q$
$d_q = d \bmod (q-1)$ —203

$S_p = M^{dp} \bmod p$ —204

$S_q = M^{dq} \bmod q$ —205

$T1 = M - S_q^e \bmod q$ —206

$T2 = M - S_p^e \bmod p$ —207

$T = T1 \oplus T2$ —208

$S1 = ((q \oplus T)q^{-1} \bmod p)Sp$ —209

$S2 = ((p \oplus T)p^{-1} \bmod q)Sq$ —210

$S = S1 + S2 \bmod n$ —211

END

## FIG. 3

## FIG. 4